# EUROPÄISCHE PATENTSCHRIFT

(11) **EP 1 555 087 B1**
(45) Veröffentlichungstag und Bekanntmachung des Hinweises auf die Patenterteilung: **20.06.2007**
(21) Anmeldenummer: 05100303.6
(22) Anmeldetag: 19.01.2005
(51) Int. Cl.: B23Q 16/10, B23Q 3/18, B23Q 16/06

(54) **Vorrichtung zum Schwenken von Werkstücken oder Vorrichtungen in Bearbeitungsmaschinen**
Arrangement for pivoting of workpieces or arrangements in machine tools
Dispositif permettant le pivotement des pièces ou des dispositifs dans des machines outils

(30) Priorität: 19.01.2004 DE 102004002859
(43) Veröffentlichungstag der Anmeldung: 20.07.2005
(73) Patentinhaber: Ludwig Ehrhardt GmbH, 35321 Laubach (DE)
(72) Erfinder: Matzat, Hendric, 08209 Rebesgrün (DE); Ehrhardt, Winfried, 35321 Laubach (DE)
(74) Vertreter: von Ahsen, Erwin-Detlef

(56) Entgegenhaltungen:
- DE-A1- 4 124 228
- DE-A1- 10 013 975
- DE-A1- 19 911 390
- GB-A- 2 111 873
- US-A- 5 735 180
- US-A- 5 910 201

## Beschreibung

Die Erfindung betrifft eine Vorrichtung zum Schwenken von Werkstücken oder Vorrichtungen in Bearbeitungsmaschinen mit einem Spindelteil, welcher ein Gehäuse und eine um ihre Längsachse drehbar in dem Gehäuse gelagerte Spindel aufweist, wobei die Spindel in ihrer jeweiligen Winkellage gegenüber dem Gehäuse mittels Hirthringen formschlüssig sicherbar ist.

Eine solche Vorrichtung ist aus der GB 2 111 873 A bekannt.

Derartige Vorrichtungen werden insbesondere immer dann eingesetzt, wenn Werkstücke von unterschiedlichen Seiten mit demselben Werkzeug bearbeitet werden müssen. Nach jedem Bearbeitungsschritt wird das Werkstück um den entsprechenden Winkelbereich weitergedreht und sodann erneut bearbeitet. Auch werden an derartigen Vorrichtungen Werkstückhalter angebracht, auf denen mehrere Werkstücke am Umfang verteilt gespannt sind. Nach jedem Bearbeitungsschritt wird der Werkstückhalter soweit weitergedreht, daß das nächste Werkstück zur Bearbeitung positioniert ist.

Damit die beim Bearbeiten eines Werkstückes auftretenden hohen Kräfte nicht zu einem unerwünschten Verdrehen der Spindel gegenüber dem Gehäuse führt, wird die Spindel formschlüssig gegenüber dem Gehäuse gegen Verdrehen gesichert. Bei einer Vorrichtung nach der DE 100 13 975 A1 dient hierzu ein Indexstift, der im vorliegenden Fall der Spindel (Spannfläche) zugeordnet ist und in eine Bohrung am feststehenden Gehäuse angreift. Durch Abheben der Spindel von dem Gehäuse wird der Indexstift außer Eingriff gebracht und die Spindel kann verdreht werden. Nach erfolgter Verdrehung wird die Spindel abgesenkt und der Indexstift kommt wieder in einer anderen Bohrung des Gehäuses in Eingriff und sichert so formschlüssig gegen Verdrehen. Nachteilig bei dieser Lösung ist, daß aufgrund des Indexstiftes nur sehr grobe Winkelteilungen zum Verdrehen der Spindel gegenüber dem Gehäuse möglich sind. Damit der Indexstift ausreichend hohe Kräfte, wie sie bei der spanenden Bearbeitung von Werkstücken in Bearbeitungsmaschinen vorkommen, aufnehmen kann, muß der Indexstift entsprechend dimensioniert sein.

Bei der Vorrichtung nach der GB 2 111 873 A wird dieser Nachteil dadurch vermieden, daß die formschlüssige Sicherung mittels Hirthringen erfolgt. Hirthringe haben die Eigenschaft, sehr feine Winkelteilungen bei gleichzeitiger Übertragung ausreichend hoher Kräfte zu erlauben. Nachteilig bei der Vorrichtung nach der GB 2 111 873 A ist jedoch, daß Antriebselement und Spindel fest miteinander verbunden sind. Auf diese Weise läßt sich die Vorrichtung nicht optimal an die jeweiligen Verhältnisse in der Bearbeitungsmaschine, mit der sie eingesetzt werden soll, anpassen.

Hiervon ausgehend liegt der Erfindung das Problem zugrunde, eine Vorrichtung der eingangs genannten Art derart weiterzubilden, daß sie optimal an die Verhältnisse der Bearbeitungsmaschine, mit der sie eingesetzt werden soll, anpaßbar ist.

Zur Lösung dieses Problems ist die erfindungsgemäße Vorrichtung dadurch gekennzeichnet, daß die Spindel und das Antriebselement mittels Kugeln formschlüssig kuppelbar sind, wobei im Antriebselement Längsnuten vorgesehen sind, welche mit den Kugeln zusammenwirken.

Auf diese Weise lassen sich unterschiedliche Antriebsteile an demselben Spindelteil ankuppeln. Die Vorrichtung ist so optimal an die jeweiligen Verhältnisse in der Bearbeitungsmaschine, mit der sie eingesetzt werden soll, anpaßbar. Der Antriebsteil wird dabei formschlüssig mit der Spindel gekuppelt. Hierzu werden Kugeln verwendet, die mit Längsnuten am Antriebselement zusammenwirken, so daß das Antriebselement einfach aus der Spindel herausgezogen und so der Antriebsteil vom Spindelteil gelöst werden kann.

Als Antriebselement eignet sich besonders ein Schwenkkolben, wie er an sich im Zusammenhang mit Schwenkspannern bekannt ist. Ein solcher Schwenkkolben weist an seiner Umfangsfläche eine Spiralnut auf, welche mit Kugeln am Gehäuse des Antriebselementes zusammenwirkt. Durch relative Axialbewegung des Schwenkkolbens gegenüber dem Gehäuse gleiten die Kugeln in der Spiralnut.

Infolgedessen wird der Schwenkkolben gegenüber dem Gehäuse um seine Längsmittelachse verdreht.

Alternativ zum Schwenkkolben kann auch eine Schwenkwelle verwendet werden, die gesondert angetrieben ist. Hierzu eignet sich ein Schneckenrad auf der Schwenkwelle, die mit einer Schnecke zusammenwirkt, oder auch ein Zahnrad, welches mit einer Zahnstange zusammenwirkt.

Vorzugsweise ist die Spindel zum Auskuppeln der Hirthringe gegen die Kraft wenigstens einer Feder aushebbar, und zwar wenigstens um das zum Auskuppeln erforderliche Maß. Aufgrund der Feder ist also dafür gesorgt, daß die Hirthringe grundsätzlich in Eingriff sind. Nur wenn die Spindel gewollt ausgehoben wird, gelangen die Hirthringe außer Eingriff und die Spindel kann verdreht werden. Es ist also sichergestellt, daß im "Ruhezustand" die Hirthringe immer in Eingriff sind, also die Verdrehsicherung wirksam ist (Fail-Safe-Verhalten). Zum Ausheben der Spindel aus dem Gehäuse können die Hirthringe manuell, magnetisch oder, was vorzugsweise im Zusammenhang mit Bearbeitungsmaschinen der Fall ist, durch ein Druckmittel betätigt werden.

Die Feder selbst ist vorzugsweise eine Druckfeder. Druckfedern haben im Gegensatz zu Zugfedern den Vorteil, daß bei einem Bruch der Feder immer noch eine Restfederkraft wirksam ist. Um eine über den Umfang gleichmäßige Andruckkraft der Hirthringe aneinander zu gewährleisten, sind nach einer Weiterbildung der Erfindung mehrere, insbesondere äquidistant, in Umfangsrichtung verteilte Federn vorgesehen.

Mehrere Vorrichtungen können auch miteinander gekuppelt werden. Auf diese Weise läßt sich ein synchrones Schwenken der Spindelteile erreichen, was für bestimmte Anwendungen von Vorteil ist.

Die Erfindung wird nachfolgend anhand von in den Zeichnungen dargestellten Ausführungsbeispielen näher erläutert. Es zeigen:
- Fig. 1: ein Spindelteil einer Vorrichtung mit den Erfindungsmerkmalen im Längsschnitt,
- Fig. 2: ein erstes Ausführungsbeispiel einer Vorrichtung mit einem Spindelteil gemäß Fig. 1 mit integriertem Schwenkantrieb im Längsschnitt im eingerückten Zustand,
- Fig. 3: die Vorrichtung gemäß Fig. 2 im Längsschnitt im ausgerückten Zustand,
- Fig. 4: die Vorrichtung gemäß Fig. 2 im Längsschnitt im ausgerückten und geschwenktem Zustand,
- Fig. 5: ein weiteres Ausführungsbeispiel einer Vorrichtung mit einem Spindelantrieb gemäß Fig. 1 im Längsschnitt im eingerückten Zustand, das jedoch nicht in den Schutzbereich, wie durch die Ansprüche definiert, fällt.
- Fig. 6: die Vorrichtung gemäß Fig. 5 im Längsschnitt im ausgerückten Zustand.

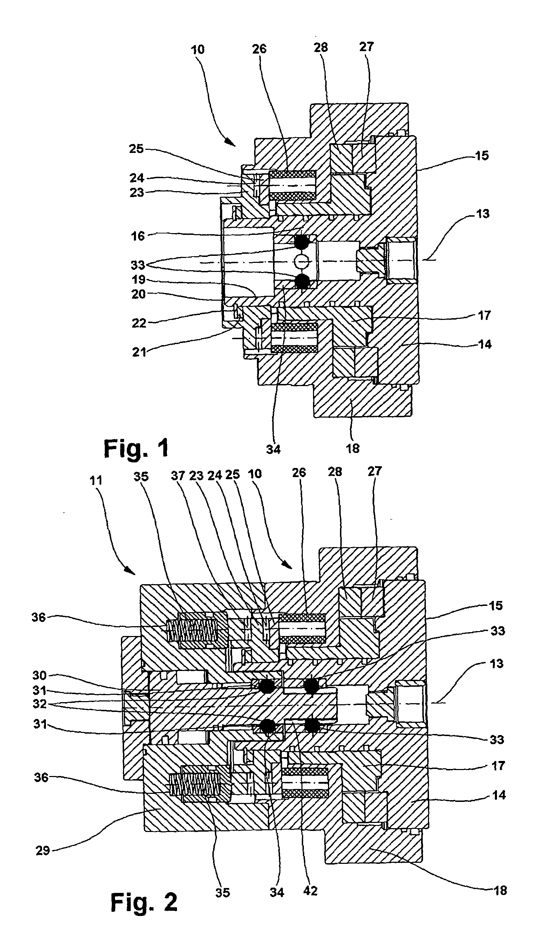

Die in Fig. 2 bis 6 gezeigten Vorrichtungen dienen dazu, an ihnen Werkstücke oder dergleichen zu spannen, die dann innerhalb von Bearbeitungszentren bearbeitet werden. Mit Hilfe dieser Vorrichtungen lassen sich die Werkstücke verschwenken, so daß sie von unterschiedlichen Seiten bearbeitet werden können.

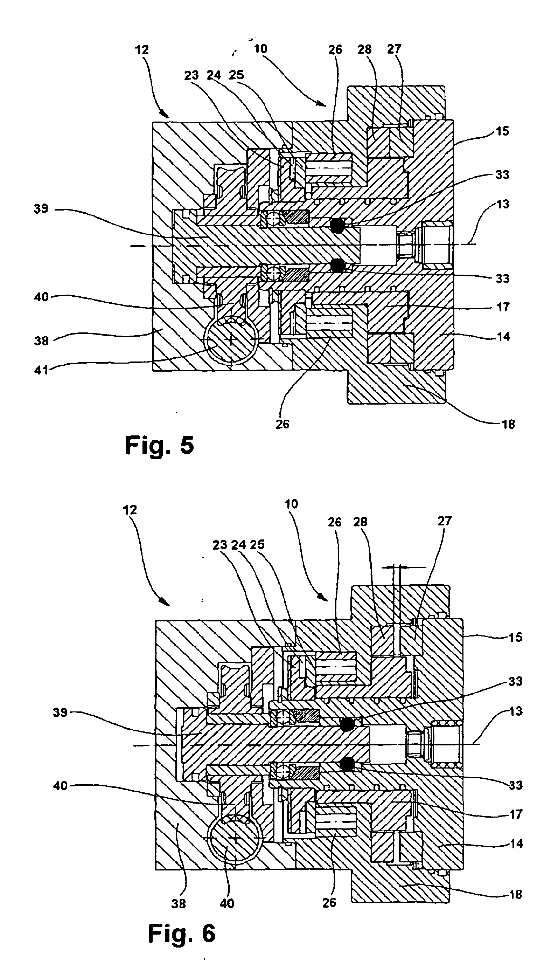

Die Vorrichtungen weisen einen in Fig. 1 im Einzelnen dargestellten Spindelteil 10 auf. An den Spindelteil 10 wird, gemäß der Darstellung in Fig. 1 links, ein Antriebsteil 11 (Fig. 2 bis 4) oder 12 (Fig. 5 und 6) lösbar angeflanscht. Über den Antrieb 11, 12 wird der Spindelteil 10 um seine Längsmittelachse 13 drehend angetrieben.

Der Spindelteil 10 weist die eigentliche Spindel 14 auf. An der Spindel 14 werden Werkstücke durch geeignete, bekannte Werkstückspannsysteme gespannt. Auch kann die Spindel 14 mit einem Schnellspannzylinder zum Spannen von Wechselpaletten bestückt sein. Die Spindel 14 selbst ist im Querschnitt etwa T-förmig ausgebildet, nämlich mit einer Planscheibe 15 und einem Lagerzapfen 16. Mit dem Lagerzapfen 16 ist die Spindel 14 über ein Radiallager 17 drehbar in einem Flanschgehäuse 18 um die Längsmittelachse 13 drehbar gelagert. An den Lagerzapfen 16 ist auf dem der Planscheibe 15 abgewandten Ende ein Ringzapfen 19 angeformt, der mit seiner freien Stirnfläche eine Kolbenfläche 20 bildet. Die Funktion der Kolbenfläche 20 wird weiter unten noch näher beschrieben.

Auf dem Ringzapfen 19 ist mittels einer Distanzscheibe 21 und einem Seegerring 22 eine sich mit der Spindel 14 drehende Druckscheibe 23 gelagert. Die Druckscheibe 23 stützt über einen Axialwälzkörper 24 (Nadellager) eine feststehende Druckscheibe 25. Zwischen dieser Druckschreibe 25 und dem Flanschgehäuse 18 ist eine Druckfeder 26 angeordnet. Mittels dieser Druckfeder 26 wird die Spindel 14 gegenüber dem Flanschgehäuse 18 in der Darstellung gemäß den Fig. 1 bis 5 nach links vorgespannt, die Spindel 14 also in das Flanschgehäuse 18 eingezogen.

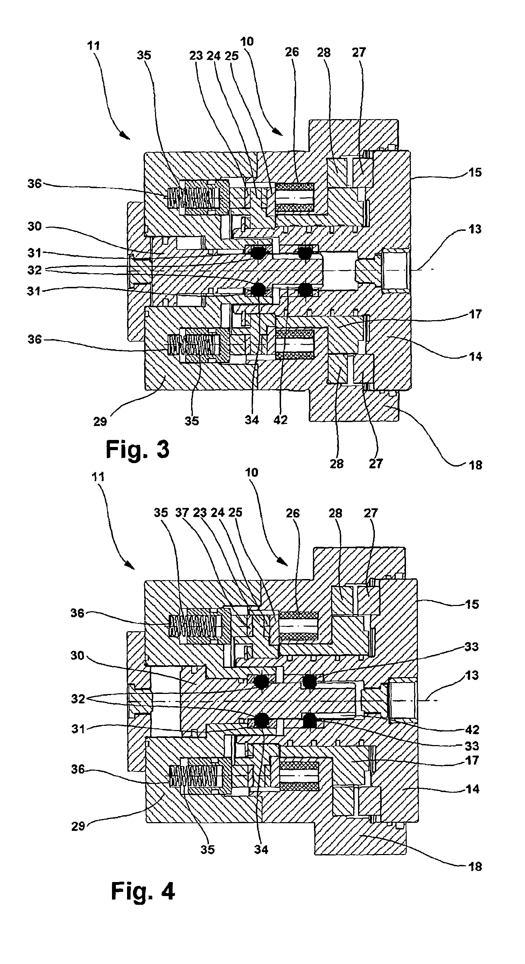

An der Planscheibe 15 der Spindel 14 ist an der dem Flanschgehäuse 18 zugewandten Innenseite ein Hirthring 27 angebracht. Der Hirthring 27 ist unverdrehbar mit der Spindel 14 verbunden. Ein korrespondierender Hirthring 28 ist an dem Flanschgehäuse 18 angebracht. Die Hirthringe 27 und 28 befinden sich aufgrund der Vorspannung der Druckfeder 26 in Eingriff miteinander. Durch Hydraulik- oder Pneumatikdruck auf den Ringzapfen 19 wird die Spindel 14 gegen die Kraft der Druckfeder 26 in der Darstellung gemäß Fig. 1 bis 6 nach rechts gedrückt und so die Hirthringe 27, 28 außer Eingriff gebracht (Fig. 3, 4 und 6). Über den Antriebsteil 11 bzw. 12 läßt sich nun die Spindel um einen frei wählbaren Winkel um ihre Längsmittelachse 13 verdrehen. Sodann wird der Hydraulik- oder Pneumatikdruck wieder abgesenkt und so durch die Druckfeder 26 die Hirthringe 27, 28 wieder in Eingriff gebracht. Die Spindel 14 ist nun in der vorgewählten Winkelstellung durch die Hirthringe 27, 28 formschlüssig gesichert.

An den insoweit beschriebenen Spindelteil 10 lassen sich unterschiedliche Antriebsteile anflanschen. In Fig. 2 bis 4 ist beispielhaft ein Antriebsteil 11 als integrierter Schwenkantrieb dargestellt. Der Antriebsteil 11 weist ein Gehäuse 29 auf, in dem ein in beide Richtungen druckmittelbetätigter Schwenkkolben 30 in Richtung der Längsmittelachse 13 hin- und her bewegbar gelagert ist. Der Schwenkkolben 30 weist eine Spiralnut 32 auf, in die unverdrehbar im Gehäuse 29 gelagerte Kugeln 33 eingreifen, wie dieses von Schwenkspannern, beispielsweise nach der DE 32 01 013 A1, bekannt ist. Die Kugeln 32 gleiten in der Spiralnut 31, während der Schwenkkolben 30 hin- und her bewegt wird. Hierdurch wird der Schwenkkolben 30 gegenüber dem feststehenden Gehäuse 29 verdreht. Diese Drehbewegung wird über weitere, einerseits mit dem Schwenkkolben 30 und andererseits mit der Spindel 14 unverdrehbar verbundenen Kugeln 33 auf die Spindel 14 übertragen. Zu diesem Zweck sitzen die der Spindel 14 zugeordneten Kugeln 33 in einem Kugelkäfig 34, der unverdrehbar in der Spindel 14 gelagert ist. Im Schwenkkolben 30 sind Längsnuten 42 angeordnet, in denen die Kugeln 33 gleiten. Auf diese Weise überträgt sich die Axialbewegung des Schwenkkolbens 30 nicht auf die Spindel 14. Es wird lediglich die Drehbewegung um die Längsmittelachse 13 übertragen.

Alternativ können die Kugeln 33 auch mit Spiralnuten zusammenwirken. Diese Spiralnuten sind dann so ausgebildet, daß sie zunächst einen Längsabschnitt aufweisen, und in der Länge oder geringfügig länger aus es für das Ausrücken des Spindelteils erforderlich ist. Sodann gehen sie in echte Spiralnuten über, und zwar mit einem zu den Spiralnuten 31 für die Kugeln 32 gegenläufigen Sinne, so daß sich einen größerer Drehwinkel für die Panscheibe 15 bei gleichem Kolbenhub des Schwenkkolbens 30 ergibt.

Im Gehäuse 29 ist ein Ausrückkolben 35 gelagert, der im vorliegenden Fall mittels Druckfedern 36 vorgespannt ist. Der Raum für die Druckfedern 36 bildet gleichzeitig eine Druckkammer. Durch Beaufschlagen dieser Kammer mit Hydrauliköl oder einem Pneumatikdruck wird der Ausrückkolben 35 in der Darstellung gemäß Fig. 2 bis 4 nach rechts gedrückt. Diese Bewegung überträgt sich über ein Axialnadellager 37 auf die Druckscheibe 23 und von dort auf den Ringzapfen 19. Hierdurch werden die Hirthringe 27, 28 außer Eingriff gebracht und damit ausgerückt (Fig. 3). Durch Absenken des Drucks auf den Ausrückkolben 35 werden die Hirthringe 27, 28 über die Druckfedern 26 wieder in Eingriff gebracht. Aufgabe der auf den Ausrückkolben 35 wirkenden Druckfedern 36 ist es konkret, das Lager 37 vorzuspannen.

Bei dem Ausführungsbeispiel gemäß Fig. 5 und 6 ist in einem Gehäuse 38 eine Schwenkwelle 39 um die Längsmittelachse 13 drehbar gelagert. Die Schwenkwelle 39 ist unverdrehbar mit einem Schneckenrad 40 verbunden, welches mit einer Schnecke 41 kämmt. Dadurch kann die Schwenkwelle 39 um die Längsmittelachse 13 drehend angetrieben werden. Diese Drehbewegung wird wiederum über die Kugeln 33 und den Kugelkäfig 34 auf die Spindel 14 übertragen.

Das Ausrücken der Hirthringe 27, 28 erfolgt im vorliegenden Ausführungsbeispiel, indem direkt die Kolbenflächen 20 am Ringzapfen 19 mit Hydraulik- oder Pneumatikdruck beaufschlagt werden.

Fig. 5 und 6 zeigen ein Antriebteil 12 mit einem externen Antrieb mittels Schneckengetriebe. Daneben kommt auch beispielsweise ein nicht näher gezeigter externer Antrieb über eine Zahnstange in Betracht.

Die vorstehende Beschreibung macht deutlich, daß sich an den Spindelteil 10 unterschiedlichste Antriebsteile anflanschen lassen. Es liegt quasi ein modularer Aufbau vor, so daß sich die erfindungsgemäße Vorrichtung optimal auf die jeweiligen Verhältnisse innerhalb der Bearbeitungsmaschine anpassen läßt.

Ferner ist es möglich, mehrere Vorrichtungen miteinander zu kuppeln, so daß diese, gleichsam in Reihe, gemeinsam betätigt werden. Hierdurch wird ein synchrones Schwenken der Vorrichtungen bzw. der auf ihnen gespannten Werkstücke erreicht. Dieses kann erfolgen, indem die Vorrichtungen über eine gemeinsame Druckmittelversorgung für das Ausrücken des Spindelteils 10 sowie, je nach Art des Antriebsteils, über eine gemeinsame Druckmittelversorgung für Antriebsteile 11 oder mit einer gemeinsamen Schecke 41 für Antriebsteile 12 oder einer gemeinsame Zahnstange entsprechende Antriebsteile oder über einen gemeinsame Steuerung von Antieben für gesonderte Schnecken 41 bzw. Zahnstangen für die Antriebsteile 12 vorgesehen werden.

In der vorstehenden Beschreibung wird davon ausgegangen, daß der Spindelteil 11 druckmittelbetätigt ist. Alternativ kommt auch eine mechanische Betätigung, beispielsweise über eine Druckgabel oder dergleichen in Betracht.

### Bezugszeichenliste:

- 10: Spindelteil
- 11: Antriebsteil
- 12: Antriebsteil
- 13: Längsmittelachse
- 14: Spindel
- 15: Planscheibe
- 16: Lagerzapfen
- 17: Radiallager
- 18: Flanschgehäuse
- 19: Ringzapfen
- 20: Kolbenfläche
- 21: Distanzscheibe
- 22: Seegerring
- 23: Druckscheibe
- 24: Axialwälzkörper
- 25: Druckscheibe
- 26: Druckfeder
- 27: Hirthring
- 28: Hirthring
- 29: Gehäuse
- 30: Schwenkkolben
- 31: Kugel
- 32: Spiralnut
- 33: Kugel
- 34: Kugelkäfig
- 35: Ausrückkolben
- 36: Druckfeder
- 37: Axialnadellager
- 38: Gehäuse
- 39: Schwenkwelle
- 40: Schneckenrad
- 41: Schnecke
- 42: Längsnut

## Patentansprüche

1. Vorrichtung zum Schwenken von Werkstücken oder Vorrichtungen in Bearbeitungsmaschinen mit einem Spindelteil (10), welcher ein Gehäuse (18) und eine um ihre Längsachse (13) drehbar in dem Gehäuse (18) gelagerte Spindel (14) aufweist, wobei die Spindel (14) in ihrer jeweiligen Winkellage gegenüber dem Gehäuse (18) formschlüssig mittels Hirthringen (27,28) sicherbar ist, und der Spindelteil (10) mit einem Antriebsteil (11), mittels dessen die Spindel (14) am ihre Längsachse (13) drehend antreibbar ist, verbunden ist, **dadurch gekennzeichnet, daß** die Spindel (14) und ein Antriebselement (30, 39) des Antriebsteils (11) mittels Kugeln (33) formschlüssig kuppelbar sind, wobei im Antriebselement (30, 39) Längsnuten (42) vorgesehen sind, weiche mit den Kugeln (33) zusammenwirken.

2. Vorrichtung nach Anspruch 1, **dadurch gekennzeichnet, daß** das Antriebselement ein Schwenkkolben (30) ist, der an seiner. Umfangsfläche eine Spiralnut (32) aufweist, welche mit Kugeln (31) am Gehäuse (29) des Antriebsteils (11) zusammenwirkt, derart, daß durch relative Axialbewegung des Schwenkkolbens (30) gegenüber dem Gehäuse (29) eine Drehbewegung des Schwenkkolbens (30) um seine Längsachse (13) ausgeübt wird.

3. Vorrichtung nach Anspruch 1, **dadurch gekennzeichnet, daß** das Antriebselement eine Schwenkwelle (39) ist, welche durch ein gesondertes Antriebsmittel, insbesondere ein Schneckenrad (40) mit Schnecke (41) oder ein Zahnrad mit Zahnstange, betätigt wird.

4. Vorrichtung nach einem der Ansprüche 1 bis 3, **dadurch gekennzeichnet, daß** die Spindel (14) zum Auskuppeln der Hirthringe (27, 28) gegen die Kraft wenigstens eins elastischen Elementes, insbesondere einer Druckfeder (26), aus dem Gehäuse (18) wenigstens um das zum Auskuppeln erforderliche Maß, insbesondere druckmittelbetätigt, aushebbar ist, wobei mehrere, insbesondere äquidistant, in Umfangsrichtung verteilte elastische Elemente vorgesehen sind.

5. Anordnung von Vorrichtungen nach einem der Ansprüche 1 bis 4, **dadurch gekennzeichnet, daß** mehrere Vorrichtungen miteinander gekuppelt sind, derart, daß ein synchrones Schwenken der Spindelteile (10) erfolgt.

## Claims

1. Device for swivelling work pieces or jigs in processing machines, comprising a spindle part (10) including a housing (18) and a spindle (14) supported for rotation about its longitudinal axis (13) in said housing (18), with said spindle (14) being adapted for being locked in a positive manner, by means of Hirth-type annular serration elements (17, 28), in its respective angular position relative to said housing (18) and with said spindle part (10) being connected to a drive part (11) by means of which said spindle (14) can be driven to rotate about its longitudinal axis (13), **characterised in that** said spindle (14) and a driving element (30, 39) of said drive part (11) are adapted to be positively coupled by means of spheres (33), with longitudinal grooves (42) being provided in said driving element (30, 39), which interact with said spheres (33).

2. Device according to Claim 1, **characterised in that** said driving element is a swivelling piston (30) having a spiral groove (32) on its peripheral surface, which interacts with spheres (31) on the housing (29) of said drive part (11) in such a manner that with a relative axial movement of said swivelling piston (30) relative to said housing (29) a rotating movement of said swivelling piston (30) about its longitudinal axis (13) is performed.

3. Device according to Claim 1, **characterised in that** said driving element is a swivelling shaft (39) that is operated by a separate driving means, in particular a worm-wheel (40) with a worm or a pinion with a rack.

4. Device according to any of the Claims 1 to 3, **characterised in that**, for disengagement of said Hirth-type annular serration elements (27, 28), said spindle is adapted to be lifted out from said housing (18) in opposition to the force of at least one resilient element, in particular a compression spring (26) at least by the degree required for disengagement, in particular under the action of a compressed medium, with several, in particular equidistant, resilient elements being distributed along the peripheral direction.

5. Assembly of devices according to any of the Claims 1 to 4, **characterised in that** several devices are coupled to each other in such a way that said spindle parts (10) are swivelled in a synchronised manner.

## Revendications

1. Dispositif pivoter des pièces à usiner ou gabarits ou montures dans des machines à usiner, comprenant une partie à broche (10) renfermant un carter (18) et une broche (14) logée de façon rotative autour de son axe longitudinal (13) dans ledit carter (18), à ladite broche (14) étant apte à être arrêté à engagement positif, moyennant des éléments annulaires à crantage Hirth (17, 28), en sa position angulaire respective relative audit carter (18) et à ladite partie à broche (10) étant reliée à une partie de commande (11), moyennant de laquelle on peut entraîner ladite broche (14) en rotation autour de son axe longitudinal (13), **caractérisé en ce que** ladite broche (14) et un élément moteur (30, 39) de ladite partie de commande (11) sont aptes à être couplé par engagement positif moyennant des sphères (33), aux rainures longitudinales (42) étant formées dans ledit élément moteur (30, 39), qui coopèrent avec lesdites sphères (33).

2. Dispositif selon la revendication 1, **caractérisé en ce que** ledit élément moteur est un piston de pivotement (30) pourvu d'une rainure en spire (32) à sa face périphérique, qui coopère avec des sphères (31) audit carter (29) de ladite partie de commande (11) d'une telle manière qu'à un mouvement relatif dudit piston de pivotement (30) relatif audit carter (29), il y a un mouvement en rotation dudit piston de pivotement (30) autour de son axe longitudinal (13).

3. Dispositif selon la revendication 1, **caractérisé en ce que** ledit élément moteur est un arbre de pivotement (39), qui est commandé par un moyen moteur séparé, en particulier une roue hélicoïdale (40) avec une vis tangente ou une roue dentée avec une crémaillère.

4. Dispositif selon une quelconque des revendications 3, **caractérisé en ce que** pour le désaccouplement desdits éléments annulaires à crantage Hirth (27, 28), ladite broche est apte à être dégagé dudit carter (18) en opposition à l'effort d'au moins un élément élastique, en particulier d'un ressort de pression (26), par au moins le degré requis pour le désaccouplement, en particulier sous l'effet d'un milieu comprimé, à plusieurs éléments élastiques, en particulier équidistants, étant distribués en sens périphérique.

5. Groupe de dispositifs selon une quelconque des revendications 4, **caractérisé en ce que** plusieurs dispositifs sont accouplés l'un à l'autre d'une telle manière, que lesdites parties à broche (10) soient pivotées en synchronisme.
